# EUROPEAN PATENT APPLICATION

(11) **EP 2 388 673 A1**
(43) Date of publication of application: **23.11.2011**
(21) Application number: 10188202.5
(22) Date of filing: 20.10.2010
(51) Int. Cl.: G05D 1/02

(54) **Virtual wall system for a mobile robotic device**

(30) Priority: 06.05.2010 US 774902
(71) Applicant: Infinite Electronics Inc, Taichung City 403 (TW)
(72) Inventor: Chiu, Ting-Yin, 406 Taichung City (TW)
(74) Representative: Becker Kurig Straus

(57) **Abstract**

A virtual wall system (10) is composed of a mobile robotic device (11) and at least one virtual wall generator (21). The mobile robotic device (11) includes a steering unit (12) for steering itself toward at least one direction, a steering control unit (14) connected with the steering unit (12) for controlling the steering of the steering unit (12), and at least one sonic receiver (18) mounted to one side thereof for receiving sonic signals. The at least one virtual wall generator (21) is placed on a planar surface where the mobile robotic device (11) moves, having a sonic emitter (26) and a taper-shaped hole (22) facing sidewards. The taper-shaped hole (22) increasingly expands from inside out. The sonic emitter (26) is to emit sonic signals that are directive subject to the taper-shaped hole (22). The at least one virtual wall generator (21) further includes a power module (29) as power supply.

## Description

### BACKGROUND OF THE INVENTION

### 1. Field of the Invention

The present invention relates generally to the control of a mobile robotic device, and more particularly, to a virtual wall system for a mobile robotic device.

### 2. Description of the Related Art

A conventional mobile robotic device, like a mobile robot, a mobile carrier, or a mobile robotic vacuum cleaner, is based on a predetermined path or visual recognition for identification of its moving direction, speed, and distance. For example, U.S. Patent No. 7,024,278 disclosed a navigating system, in which its mobile robotic device includes an emitter for emitting a directive beam; next, the directive beam is received by a receiver at a base station and then the base station identifies, through logical operation, whether to emit a control signal to the mobile robotic device; if the control signal is emitted, the mobile robotic device will receive it and change its moving direction.

In addition, in the Roomba Owners manual and Luck's Roomba internals: Nosce Your Bot, it discloses that the beam is applied to the virtual wall system as its signal source; a signal emitter is mounted to one side of the mobile vacuum cleaner, a virtual wall generator includes a taper-shaped cavity increasingly expanding from inside out, and a receiver and an emitter are mounted to the cavity.

### SUMMARY OF THE INVENTION

The primary objective of the present invention is to provide a virtual wall system, which generates a virtual wall for altering movement activity of a mobile robotic device operating in a defined working area by a manner different from the prior art.

The foregoing objective of the present invention is attained by the virtual wall system, which is composed of a mobile robotic device and at least one virtual wall generator. The mobile robotic device includes a steering unit for steering itself toward at least one direction, a steering control unit connected with the steering unit for controlling the steering of the steering unit, and at least one sonic receiver mounted to one side of the mobile robotic device for receiving sonic signals. The at least one virtual wall system generator is placed on a planar surface where the mobile robotic device moves, having a sonic emitter and a taper-shaped hole facing sidewards. The taper-shaped hole increasingly expands from inside out. The sonic emitter is to emit sonic signals that are directive subject to the taper-shaped hole. The at least one virtual wall system generator further includes a power module as power supply. When the mobile robotic device moves, the sonic receiver can receive a sonic signal and then the steering control unit can control the steering unit to change the moving direction.

### BRIEF DESCRIPTION OF THE DRAWINGS

FIG. 1 is a schematic view of a preferred embodiment of the present invention.

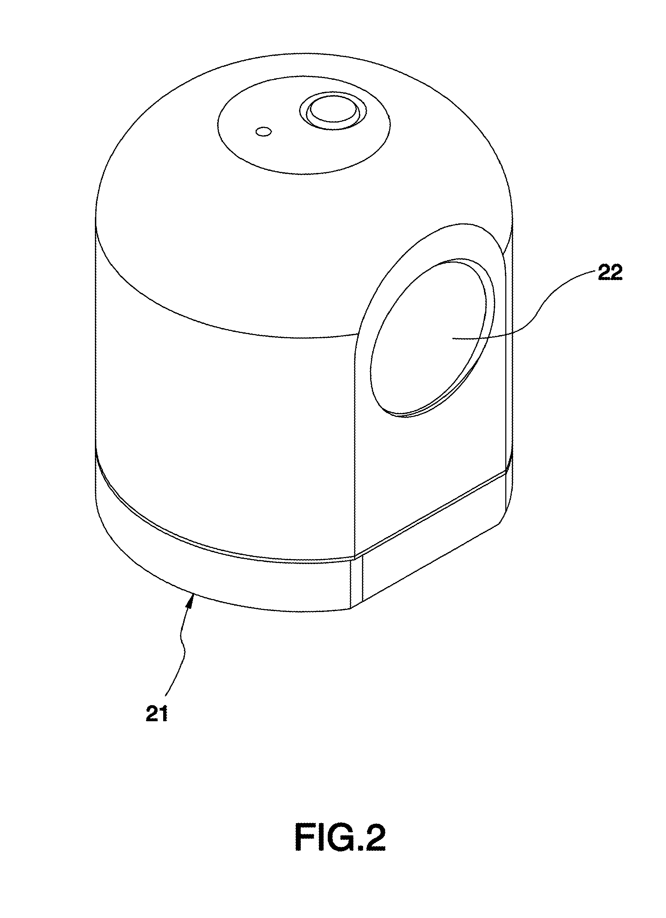

FIG. 2 shows the virtual wall generator of the preferred embodiment of the present invention.
FIG. 3 is a partially exploded view of the virtual wall generator of the preferred embodiment of the present invention.
FIG. 4 is a schematic view of the preferred embodiment of the present invention in action.
FIG. 5 is another schematic view of the preferred embodiment of the present invention in action.
FIG. 6 is similar to FIG. 2, showing that a solar panel is mounted to the virtual wall generator.

### DETAILED DESCRIPTION OF PREFERRED EMBODIMENTS

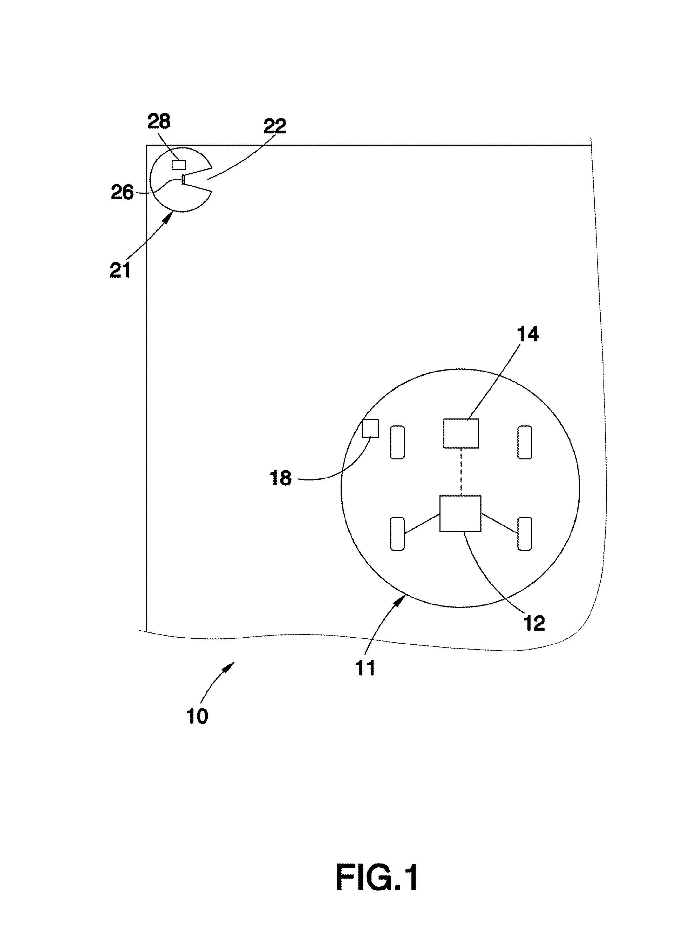

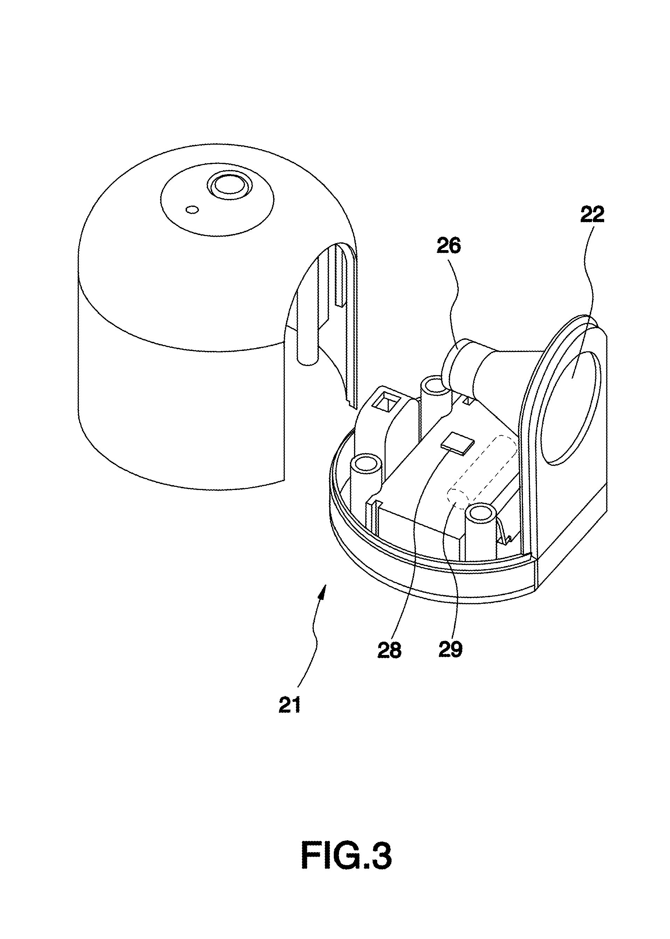

Referring to FIGS. 1 and 3, a virtual wall system 10 constructed according to a preferred embodiment of the present invention is composed of a mobile robotic device 11 and a virtual wall generator 21.

The mobile robotic device 11 includes a steering unit 12 for steering itself toward at least one direction, a steering control unit 14 connected with the steering unit 12 for controlling the steering of the steering unit 12, and at least one sonic receiver 18 mounted to one side thereof for receiving sonic signals.

The virtual wall generator 21 is placed on a planar surface on which the mobile moves, like the ground, and includes a taper-shaped hole 22 and a sonic emitter 26. The taper-shaped hole 22 has an opening facing sideward and expands increasingly from inside out to be shaped like a cone. The sonic emitter 26 can be controlled by a signal controller 28 to emit sonic signals, which are ultrasonic waves in this embodiment and are directive subject to the taper-shaped hole 22. Besides, the virtual wall generator 21 further includes a power module 29, which is a battery in this embodiment, as a power supply. In this embodiment, the sonic signals emitted by the sonic emitter 26 are consecutive.

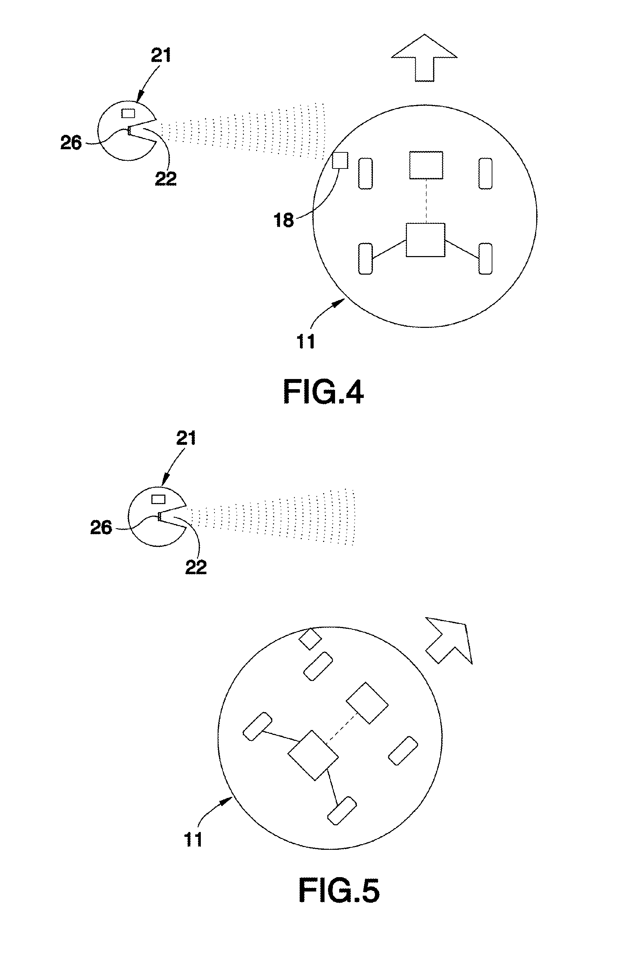

Referring to FIG. 4, when the mobile robotic device 11 is moving, the sonic receiver 18 can receive the sonic signals from the sonic emitter 26 and then the steering control unit 14 can control the steering unit 12 to change its moving direction.

As shown in FIG. 4, the taper-shaped hole 22 can confine the direction, toward which the sonic signals of the sonic emitter 26 are emitted, thus ensuring that the mobile robotic device 11 can only receive the sonic signals within a range extended from the opening of the taper-shaped hole 22 while passing by the virtual wall generator 21. Referring to FIG. 5, if the mobile robotic device 11 is not located within the extended range of the opening of the taper-shaped hole 22 while passing by the virtual wall generator 21, the mobile robotic device 11 will not receive the sonic signals, such that the mobile robotic device 11 will not change its moving direction.

It is to be noted that the sonic signals emitted by the sonic emitter 26 can be alternatively intermittent to be received by the sonic receiver 18; the sonic emitter 26 can be set to emit intermittent signals between which every interval is less than or equal to one second.

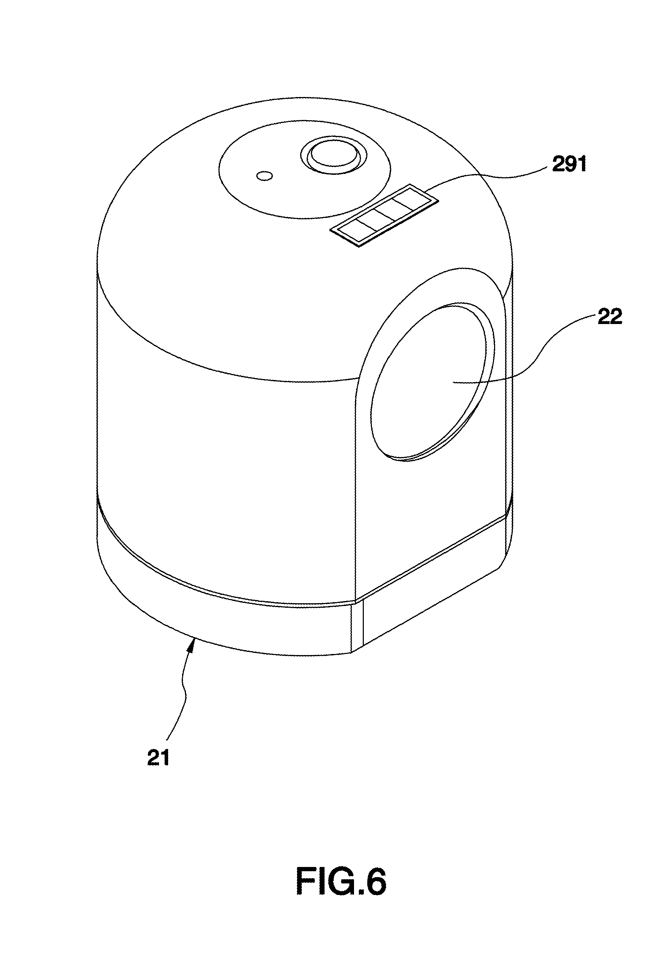

Referring to FIG. 6, a solar panel 291 can be further mounted to the virtual wall generator 21, being electrically connected with the power module 29 which can be a rechargeable battery. In light of this, the sun shines on the solar panel 291 to generate electric energy for charging the power module 29 to further increase the electric energy stored in the power module 29, thus elongating the duration of the emission of the sonic signals of the virtual wall generator 21.

In conclusion, the virtual wall generator 21 keeps emitting the sonic signals and while the mobile robotic device 11 passes by the virtual wall generator 21, the sonic receiver 18 receives the sonic signals and then the steering control unit 14 controls the steering unit 12 to change its moving direction. As can be seen from this, the virtual wall generator 21 only includes the sonic emitter 26 except any other receiver; the mobile robotic device 11 only includes the sonic receiver 18 except any other emitter; the direction of the emission of the sonic signals in the present invention are under the control of the taper-shaped hole 22. Therefore, the present invention is simpler than the prior art in structure and operation.

## Claims

1. A virtual wall system (10) being **characterized in** comprising:
a mobile robotic device (11) having a steering unit (12) for steering itself toward at least one direction, a steering control unit (14) connected with said steering unit (12) for controlling the steering of said steering unit (12), and at least one sonic receiver (18) mounted to a side thereof for receiving at least one sonic signal; and
at least one virtual wall generator (21) mounted on a planar surface that said mobile robotic device (11) moves on, the virtual wall generator (21) having a taper-shaped hole (22) increasingly expanding from inside out and having an opening facing sideward, a sonic emitter (26) for emitting at least one sonic signal which is directive subject to the taper-shaped hole (22), and a power module (29) as a power supply;
whereby while the mobile robotic device (11) is moving and the sonic receiver (18) receives the at least one sonic signal from the sonic emitter (26), the steering control unit (14) controls the steering of the steering unit (12).

2. The virtual wall system (10) as defined in claim 1, being **characterized in that** the power module (29) is a battery.

3. The virtual wall system (10) as defined in claim 1, being **characterized in that** the power module (29) is a rechargeable battery; the virtual wall generator (21) comprises a solar panel (291) electrically connected with the power module (29), the solar panel (291) being shined by the light to generate electric energy for charging the power module (29).

4. The virtual wall system (10) as defined in claim 1, being **characterized in that** the taper-shaped hole (22) is conic.

5. The virtual wall system (10) as defined in claim 1, being **characterized in that** the at least one sonic signal emitted by the virtual wall generator (21) is consecutive.

6. The virtual wall system (10) as defined in claim 1, being **characterized in that** the at least one sonic signal emitted by the virtual wall generator (21) is plural and intermittent.

7. The virtual wall system (10) as defined in claim 6, being **characterized in that** an interval between each two sonic signals is less than or equal to one second.
